# DEMANDE DE BREVET EUROPEEN

(11) **EP 3 836 181 A1**
(43) Date de publication de la demande: **16.06.2021**
(21) Numéro de dépôt: 20213553.9
(22) Date de dépôt: 11.12.2020
(51) Int. Cl.: H01H 25/00, H01H 25/04, H01H 23/16

(54) **POINT DE COMMANDE POUR UNE INSTALLATION DE FERMETURE OU DE PROTECTION SOLAIRE ET INSTALLATION DE FERMETURE OU DE PROTECTION SOLAIRE COMPRENANT UN TEL POINT DE COMMANDE**

(30) Priorité: 13.12.2019 FR 1914404
(71) Demandeur: Somfy Activites SA, 74300 Cluses (FR)
(72) Inventeur: SOURIVONG, Justin, 74300 Cluses (FR); PIMOUGUET, Olivier, 74300 CLUSES (FR)
(74) Mandataire: Lavoix

(57) **Abrégé**

Point de commande (16) pour une installation de fermeture ou de protection solaire, comprenant un boitier (19), au moins deux touches de pression (30A, 30B) et un mécanisme de rappel (80). Les touches de pression, dites première (30A) et deuxième touches (30B), définissent chacune une position relâchée et une position enfoncée, la position enfoncée étant obtenue par action d'un utilisateur sur la touche de pression suivant une direction d'appui (F4) et étant associée à un signal de commande respectif. Le mécanisme de rappel (80), qui est activable suivant un axe de pression (A22) sensiblement parallèle à la direction d'appui (F4) entre une configuration stable et une configuration contrainte, est conçu pour repousser la première touche (30A) depuis sa position enfoncée vers sa position relâchée lorsque le mécanisme de rappel passe de sa configuration contrainte vers sa configuration stable. La première touche (30A) est montée pivotante par rapport au boiter autour d'un premier axe de basculement (56B), tandis que la deuxième touche (30B) est montée pivotante par rapport au boiter autour d'un deuxième axe de basculement (56A). Le mécanisme de rappel (80) repousse également la deuxième touche (30B) depuis sa position enfoncée vers sa position relâchée lorsque le mécanisme de rappel passe de sa configuration contrainte vers sa configuration stable, alors que le mécanisme de rappel est situé à la fois entre la première touche (30A) et le premier axe de basculement (56B) et entre la deuxième touche (30B) et le deuxième axe de basculement (56A). Lorsque l'une quelconque des première ou deuxième touches (30A, 30B) est déplacée par un utilisateur depuis sa position relâchée vers sa position enfoncée, son déplacement entraîne le mécanisme de rappel (80) depuis sa configuration stable vers sa configuration contrainte.

## Description

La présente invention concerne un point de commande pour une installation de fermeture ou de protection solaire, ainsi qu'une installation de fermeture ou de protection solaire comprenant un tel point de commande.

Dans les bâtiments dont les murs présentent des ouvertures, telles que des portes ou des fenêtres, des éléments de fermetures ou de protections solaires sont généralement installés devant les ouvertures afin d'améliorer le confort intérieur du bâtiment. Ces éléments de fermeture comportent un écran, qui peut être de façon non-limitative un tablier de volet roulant, une toile solaire, une moustiquaire, un store ou un brise-soleil orientable dit aussi « BSO ». Dans les bâtiments offrant un certain niveau de confort, les éléments de fermeture son motorisés, et comportent alors un actionneur d'entrainement qui comprend au moins un moteur électrique et qui est commandé par un interrupteur de commande. Pour éviter l'installation de fils de commande spécifiques entre l'interrupteur de commande et l'actionneur, l'interrupteur de commande est généralement un point de commande à distance, dit aussi télécommande, en particulier un point de commande à ondes radio.

Un tel point de commande fonctionne avec de l'énergie électrique. À cette fin, il est connu d'alimenter le point de commande par une source d'électricité interne, telle qu'une pile électrique. Cependant une telle pile électrique demande un remplacement périodique, ce qui est peu pratique.

EP-2109086-A1 décrit un point de commande sans batterie, avec un mécanisme comprenant des boutons basculants sur différents contacteurs qui sont chacun associés à un signal de commande respectif. Le mécanisme est monté sur un châssis articulé d'activation d'un générateur d'électricité. Différents groupes de boutons basculants entrainent des éléments à bascule, qui sont reliés mécaniquement à un même moyen de génération d'énergie, sans toutefois expliquer comment ce lien mécanique peut être mis en œuvre.

Or, les points de commandes à génération d'énergie nécessitent d'être de construction simple et peu coûteuse, avec un effort d'actionnement des touches qui soit au maximum égal à l'actionnement du générateur d'électricité, et ceci pour plusieurs touches activant le même générateur d'électricité.

KR-102 025 358-B1 décrit un exemple d'interrupteur comprenant plusieurs boutons basculants, actionnant chacun un même générateur d'électricité. Ce générateur présente une structure complexe et fragile, le générateur étant actionné au moyen d'une plaquette pivotante, tandis que des ressorts repoussent les boutons basculants en position relevée.

C'est à ces problèmes qu'entend plus particulièrement remédier l'invention, en proposant un point de commande de structure et d'utilisation simple, permettant d'utiliser un seul mécanisme de rappel pour plusieurs touches.

À cet effet, l'invention concerne un point de commande selon la revendication 1.

Grâce à l'invention, le même mécanisme de rappel est sollicité lorsqu'un utilisateur presse sur l'une quelconque des touches. Le point de commande selon l'invention est de structure simple, avec un nombre de pièces réduit. Grâce à l'agencement relatif du mécanisme de rappel par rapport aux touches et aux axes de basculement, l'effort nécessaire à l'utilisateur pour enfoncer une des touches est inférieur à l'effort générée par le mécanisme de rappel, ce qui facilite l'utilisation du point de commande.

Avantageusement, le mécanisme de rappel comprend un générateur d'électricité, qui génère de l'électricité chaque fois qu'un utilisateur enfonce une des touches. Le point de commande selon l'invention est autonome en énergie et fonctionne sans batterie qui nécessiterait un remplacement périodique.

Des aspects avantageux mais non obligatoires de l'invention sont énoncés aux revendications 2 à 12.

L'invention concerne également une installation de fermeture ou de protection solaire selon la revendication 13.

L'invention sera mieux comprise, et d'autres avantages de celle-ci apparaîtront plus clairement à la lumière de la description qui va suivre, de trois modes de réalisation d'un point de commande et d'une installation de fermeture ou de protection solaire conformes à son principe, donnée uniquement à titre d'exemple et faite en référence aux dessins annexés, dans lesquels :
- [Fig 1] la figure 1 représente une installation de fermeture, comprenant un point de commande conforme à un premier mode de réalisation de l'invention ;
- [Fig 2] la figure 2 est une vue en perspective du point de commande de la figure 1 ;
- [Fig 3] la figure 3 est une vue analogue à la figure 2, certaines pièces étant cachées pour faciliter la lecture,
- [Fig 4] la figure 4 est une vue en perspective éclatée de certaines pièces du point de commande de la figure 1, observé suivant la flèche IV de la figure 2 ;
- [Fig 5] la figure 5 est une coupe suivant le plan A-A repéré en figure 2 du point de commande de la figure 1, représenté dans une première configuration ;
- [Fig 6] la figure 6 est une vue analogue à la figure 5, le point de commande étant représenté dans une deuxième configuration ;
- [Fig 7] la figure 7 est une coupe d'un point de commande conforme à un deuxième mode de réalisation de l'invention, et
- [Fig. 8] la figure 8 est une vue en perspective d'un point de commande conforme à un troisième mode de réalisation de l'invention.

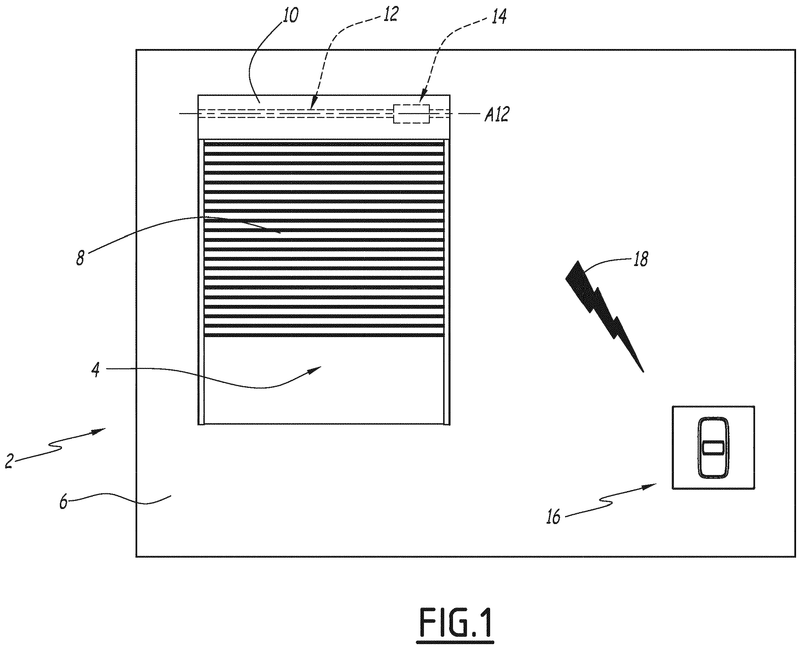

La figure 1 représente une installation de fermeture 2, qui obture partiellement une ouverture 4 ménagée dans un mur 6. Dans l'exemple illustré, l'ouverture 4 est une fenêtre, qui traverse de part en part le mur 6. En variante non représentée, l'ouverture 4 est une porte.

L'installation de fermeture 2 est ici une installation de volet roulant. L'ouverture 4 est ici partiellement obturée par un écran d'occultation 8 qui est le tablier du volet roulant.

L'installation de fermeture 2 comprend un coffre 10, qui est ménagé sur une partie supérieure de l'ouverture 4 et délimite un volume interne dans lequel est logé un arbre 12. L'arbre 12 définit un axe A12, qui est horizontal. L'écran d'occultation 8 est relié à l'arbre 12, l'arbre 12 étant ici monté pivotant par rapport au coffre 10 autour de l'axe A12. On comprend que l'arbre 12 est un arbre d'enroulement de l'écran 8. L'arbre 12 est entraîné en rotation par un actionneur d'entraînement 14, qui est ici interne à l'arbre 12.

L'actionneur 14 est commandé par un point de commande 16, par l'intermédiaire de signaux de commande émis par le point de commande 16 et reçus par l'actionneur 14. Par point de commande, on entend un dispositif de commande à distance, communicant sans fil avec l'actionneur 14. Un signal de commande est représenté par un éclair 18 sur la figure 1.

Les signaux de commande sont reçus par l'actionneur 14 même lorsque l'actionneur 14 est situé dans le volume interne du coffre 10, et sont avantageusement des signaux transmis par ondes radio. Le point de commande 16 comprend ainsi un module de transmission des ondes radio, qui n'est pas détaillé plus avant dans la présente description.

Dans l'exemple illustré, le point de commande 16 est représenté fixé sur le mur 6 dans lequel est ménagée l'ouverture 4. Bien entendu, le point de commande 16 peut être fixé sur un autre mur que le mur 6, ou bien n'est fixée à aucun mur et auquel cas le point de commande 16 est simplement posé à la convenance d'un utilisateur. La contrainte spatiale est notamment que le point de commande 16 doit se trouver dans une zone à portée radio de l'actionneur 14.

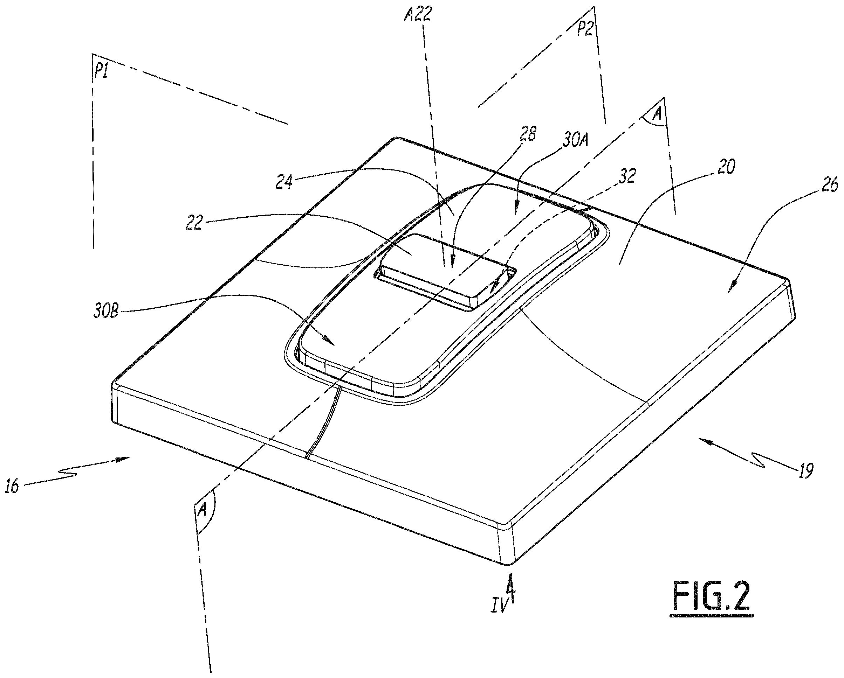

Le point de commande 16 est représenté à plus grande échelle sur la figure 2.

Le point de commande 16 comprend un boitier 19 avec un capot 20. Il comprend également un bouton central 22 et un bouton basculant 24.

Dans l'exemple illustré, le capot 20 présente une forme globalement parallélépipédique, avec une face extérieure 26 galbée dans laquelle est ménagé un logement accueillant un bouton central 22 et un bouton basculant 24. Les formes illustrées du boitier 19, des boutons central et basculant 22 et 24 ne sont pas limitatives. En particulier, le bouton basculant peut comprendre deux touches indépendantes.

Le bouton central 22 présente une face définissant une touche centrale 28 de pression, la touche centrale 28 définissant un axe de pression A22 du bouton central 22, tandis que le bouton basculant 24 présente une forme allongée avec deux extrémités, qui sont opposées l'une à l'autre suivant la direction longitudinale du bouton basculant 24 et au voisinage desquelles sont respectivement ménagées deux touches de pression 30A et 30B. Les deux touches de pression 30A et 30B sont ménagées autour d'une ouverture centrale 32 du bouton basculant 24, dans laquelle est logée la touche centrale 28 du bouton central 22. Dans l'exemple illustré, les touches de pression 30A et 30B sont situées de part et d'autre de l'ouverture centrale 32.

Par commodité on définit un plan transversal P1 comme étant un plan passant par l'axe de pression A22 et orthogonal à la direction longitudinale du bouton basculant 24 dans la configuration du point de commande 16 représentée sur les figures 2, 3 et 5. On définit aussi un plan longitudinal P2 comme étant un plan passant par l'axe de pression A22 et orthogonal au plan transversal P1.

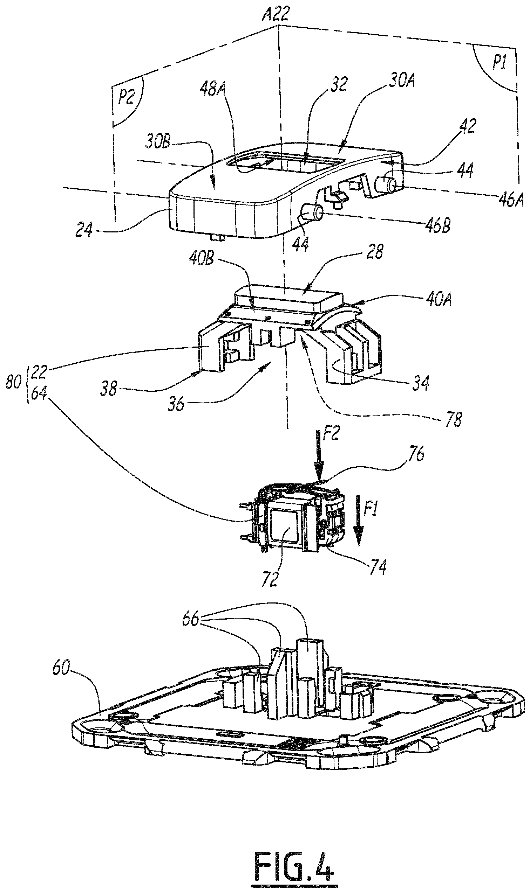

Le bouton central 22 comprend des pattes 34, qui se déploient parallèlement à l'axe de pression A22 et dans une direction opposée à la touche centrale 28. Les pattes 34 définissent entre elles un volume d'accueil 36, visible sur la figure 4. Les pattes 34 sont reliées par une extrémité à la touche centrale 28, certaines des pattes 24 présentant, à une extrémité opposée, des butées 38.

Le bouton central 22 comprend, en outre, deux faces d'appui 40A et 40B, visibles sur la figure 4, qui sont situées de part et d'autre du plan transversal P1 et sont orientées suivant une direction présentant une composante parallèle à l'axe A22. Dans l'exemple illustré, les faces d'appui 40A et 40B sont disposées symétriquement de part et d'autre du plan transversal P1, la face d'appui 40A étant du même côté du plan P1 que la touche de pression 30A lorsque la point de commande 16 est assemblée.

Le bouton basculant 24 présente ici une forme globalement symétrique à la fois par rapport au plan transversal P1 et par rapport au plan longitudinal P2. Le bouton basculant 24 comprend des faces latérales 42, qui sont parallèles au plan longitudinal P2 et sur lesquelles sont ménagés en saillie quatre tétons 44.

Les tétons 44 présentent ici chacun une même forme, à savoir cylindrique de section circulaire, et sont disposés symétriquement de part et d'autre du plan longitudinal P2, et sont aussi disposés symétriquement de part et d'autre du plan transversal P1. Les deux tétons 44 situés d'un même côté du plan transversal P1 sont alignés suivant un axe orthogonal au plan longitudinal P2. L'axe formé par les deux tétons 44 situés du même côté du plan transversal P1 que la touche de pression 30A est référencé 46A, tandis que l'axe défini par les deux tétons 44 situés du même côté du plan transversal P1 que la deuxième touche de pression 30B est référencé 46B.

Le bouton basculant 24 présente, en outre, des zones d'appui 48A et 48B, qui sont des zones intermédiaires entre les deux touches de pression 30A et 30B. Les zones d'appui 48A et 48B sont ici situées de part et d'autre de l'ouverture centrale 32 entre les tétons 44 et sont orientées à l'opposé des touches 30A et 30B.

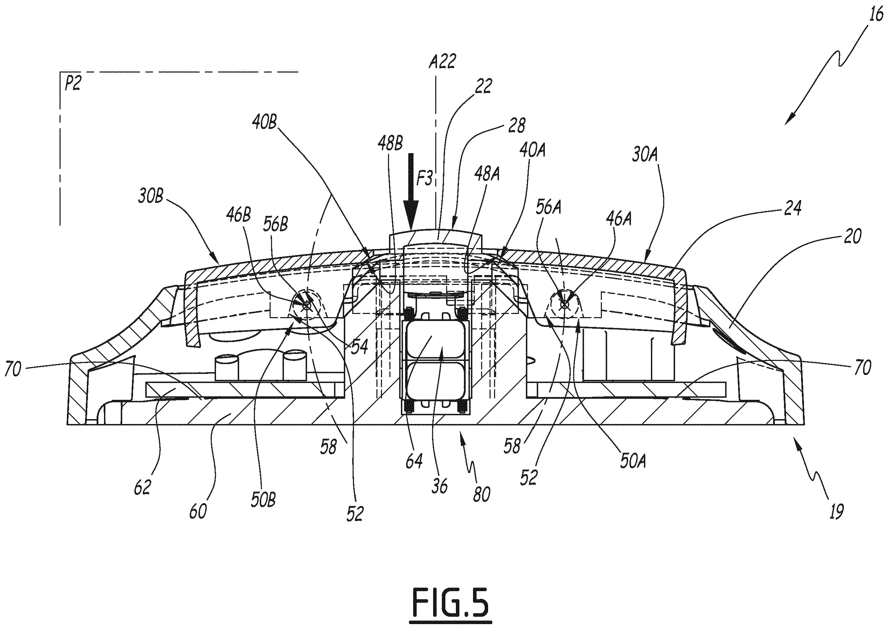

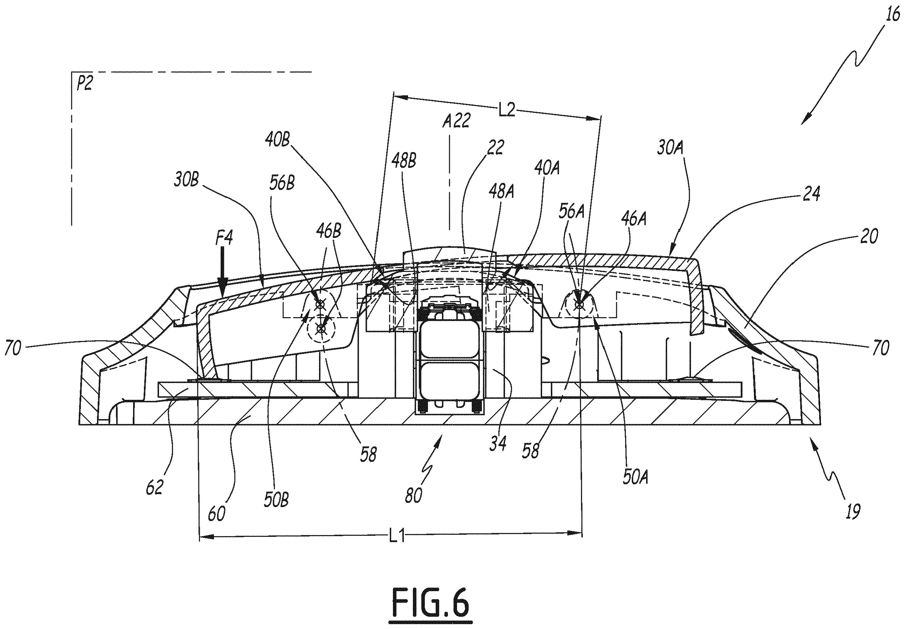

Le capot 20 présente, sur une face opposée à la face extérieure 26, des guides 50A et 50B, qui sont visibles sur les figures 5 et 6.

Les guides 50A et 50B, chacun au nombre de deux, sont disposés symétriquement de part et d'autre du plan transversal P1 et du plan longitudinal P2. Sur les figures, les guides 50A sont situés du même côté du plan transversal P1 que l'axe 46A, tandis que les guides 50B sont situés du même côté du plan transversal P1 que l'axe 46B.

Chacun des guides 50A et 50B comprend un passage 52 et une partie terminale 54, visible sur les figures 5 et 6. Chacune des parties terminales 54 est ici une portion de cylindre de section circulaire centré sur un axe dit « de basculement », qui est orthogonal au plan longitudinal P2. L'axe de basculement des deux guides 50A est référencé 56A, tandis que l'axe de basculement des deux guides 50B est référencé 56B. Les axes de basculement 56A et 56B sont ainsi situés de part et d'autre du bouton central 22. Plus précisément, l'axe de basculement 56A est situé au voisinage de la touche de pression 30A du bouton basculant 24, en particulier sous ou au-dessous de la touche de pression 30A, tandis que l'axe de basculement 56B est situé au voisinage de la touche de pression 30B du bouton basculant 24, en particulier sous ou au-dessous de la touche de pression 30B.

Sur la figure 5, dans laquelle le bouton basculant 24 est représenté dans une première position dite « relâchée », chacune des parties terminales 54 accueille un téton 44 respectif, et l'axe de basculement 56A est confondu avec l'axe 46A, tandis que l'axe de basculement 56B est confondu avec l'axe 46B.

Sur la figure 6, dans laquelle la touche de pression 30B du bouton basculant 24 est représentée dans une position dite « enfoncée », l'axe 56B est distinct de l'axe 46B, tandis que l'axe 56A reste confondu avec l'axe 46A.

Chacun des passages 52 présente, dans le plan des figures 5 ou 6, deux faces situées l'une en regard de l'autre qui définissent un axe de guidage 58. L'axe de guidage 58 de chaque guide 50A est porté par une portion d'arc de cercle centré sur l'axe de basculement 56B, tandis que l'axe de guidage 58 de chaque guide 50B est porté par une portion d'arc de cercle centré sur l'axe de basculement 56A.

Le point de commande 16 comprend, en outre, une embase 60, une plaque intermédiaire 62, correspondant notamment à une carte électronique ou à un circuit imprimé, et un générateur 64.

L'embase 60, qui présente ici une forme de plaque carrée, est prévue pour d'une part coopérer avec des organes de fixation de manière à être fixée sur un mur et, d'autre part, pour être assemblée avec le capot 20 pour former le boitier 19 au moyen d'organes de fixation 65, qui sont par exemple des vis.

Sur une partie centrale de l'embase 60, des montants de guidage 66, visibles sur la figure 4, sont ménagés en saillie d'un même côté de l'embase 60 et sont prévus pour coopérer avec les pattes 34 du bouton central 22, de manière à guider en translation le bouton central 22 par rapport à l'embase 60 suivant la direction des montants de guidage 66, qui est ici orthogonale à l'embase 60.

Avantageusement, l'axe de pression A22 de la touche centrale 28 est parallèle à la direction de translation du bouton central 22 par rapport à l'embase 60.

Les montants 66 et les pattes 34 comprennent avantageusement des organes de retenue, non représentés, qui coopèrent ensemble de manière à limiter l'amplitude des mouvements de translation du bouton central 22 par rapport à l'embase 60.

On comprend que les mouvements de translation du bouton central 22 par rapport à l'embase 60 sont limités, d'une part, par les organes de retenue et, d'autre part, par les butées 38 en appui sur l'embase 60.

Bien entendu, le guidage en translation et la limitation de l'amplitude du mouvement de translation du bouton 22 par rapport à l'embase 60 peuvent être réalisés par d'autres moyens que les pattes 34 coopérant avec les montants 66 décrits dans l'exemple des figures.

La plaque intermédiaire 62 ou carte électronique ou circuit imprimé, présente ici une forme carrée et est assemblée à l'embase 60 au sein du boitier 19 et supporte des composants électroniques. Des contacteurs 70 sont ainsi disposés sur la plaque 62 de manière à être activés selon une configuration spécifique respective lorsque l'une des touches 28, 30A ou 30B est en position enfoncée. En particulier, le point de commande 16 comprend au moins un premier contacteur 70 associé à la première touche 30A et au moins un deuxième contacteur 70 associé à la deuxième touche 30B. Les contacteurs 70 sont disposés de manière à être activés respectivement lorsque l'une ou l'autre des touches de pression secondaires 30A ou 30B est en position enfoncée.

L'axe de basculement 56A ou 56B et le contacteur 70 associés à une même touche 30A ou 30B sont disposés de part et d'autre du bouton central 22.

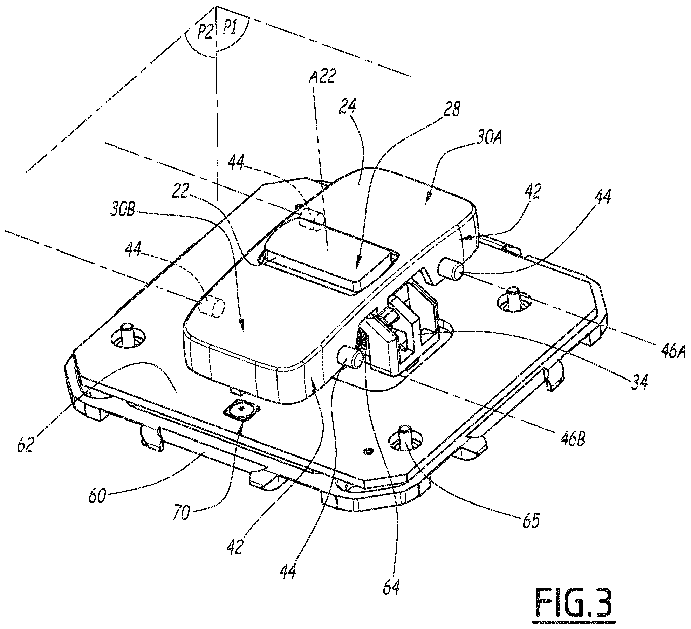

Un seul des contacteurs 70 est visible sur la figure 3.

Un système logique, non représenté, est prévu pour déterminer le signal de commande à transmettre, en fonction de la configuration spécifique d'activation des contacteurs 70. Le système logique est par exemple un circuit électronique programmable, supporté par ou intégré à la plaque intermédiaire 62.

Le point de commande 16 comprend aussi un émetteur, non représenté, qui est apte à émettre, à destination de l'actionneur 14, le signal de commande déterminé par le système logique, par exemple sous la forme d'ondes radio.

Le générateur 64, d'un type connu, comprend une partie principale 72, une partie mobile 74 et un organe de rappel, par exemple sous forme d'un levier d'activation 76.

La partie principale 72 est prévue pour être fixée à l'embase 60. La partie mobile 74 est mobile en translation par rapport à la partie principale 72 suivant une direction dite « d'activation », représentée par la flèche F1 sur la figure 4. Le levier d'activation 76 relie la partie principale 72 à la partie mobile 74, le levier 76 étant prévu pour, lorsqu'une force est appliquée sur le levier 76 suivant une direction d'appui F2 parallèle et dans le même sens que la direction d'activation F1, déplacer la partie mobile 74 par rapport à la partie principale 72 depuis une position dite « de repos », représentée sur la figure 4, vers une position dite « activée ».

Lorsque la partie mobile 74 passe de la position de repos à la position activée, le générateur 64 passe d'une configuration dite « de repos » à une configuration dite « activée » et génère de l'énergie électrique.

Avantageusement, le générateur 64 est dit « monostable », c'est-à-dire que lorsque la force appliquée sur le levier 76 est interrompue, le générateur 64 revient dans sa configuration de repos, qui est une configuration stable. Dans l'exemple illustré, l'organe de rappel ou levier d'activation 76 est une lame métallique, qui contribue à ramener le générateur 64 dans sa configuration de repos. Lorsque la partie mobile 74 passe de la position activée à la position de repos, le générateur 64 passe d'une configuration activée à une configuration de repos et génère également de l'énergie électrique.

Le point de commande 16 illustré sur les figures n'a pas besoin de comporter de batterie pour fonctionner. Une capacité de stockage temporaire peut être utilisée pour un stockage temporaire de l'énergie électrique par le générateur pour un changement de configuration entre la configuration de repos et la configuration activée ou pour un changement de configuration depuis une configuration de repos, passage par une configuration activée et jusqu'au retour du générateur dans sa configuration de repos. Une telle capacité peut être un composant électronique discret monté sur la carte électronique 62.

Dans l'exemple illustré, le générateur 64 est fixé à l'embase 60 entre les pattes 34 et est logé dans le volume d'accueil 36 du bouton central 22. Le levier d'activation 76 est en appui sur une face interne 78 du bouton central 22 et tend à éloigner le bouton 22 de l'embase 60. La face interne 78 est ici une face orientée à l'opposé de la touche centrale 28.

Avantageusement, la direction d'appui F2 du générateur 64 est parallèle à l'axe de pression A22 du bouton central 22. Autrement dit, la direction d'activation F1 du générateur 64 est avantageusement parallèle à la direction de translation du bouton central 22, ce qui réduit l'intensité de l'effort qu'un utilisateur doit exercer pour enfoncer le bouton 22.

Le bouton central 22, conjointement repoussé par le levier d'activation 76 et retenu par les organes de retenue, est au repos dans une position dite « relâchée », représentée sur les figures 2, 3 et 5. Le levier 76 repousse le bouton central 22 avec une force de rappel telle que la manipulation par l'utilisateur reste aisée, tout en évitant les manipulations inopinées. En pratique, la force de rappel du levier 76 est comprise entre 3 N et 15 N, de préférence entre 5 N et 12 N. Une force de rappel du levier 76 égale à 7 N donne de bons résultats.

Le bouton basculant 24 est, quant à lui, conjointement guidé par le capot 20 et en appui sur le bouton central 22. Plus précisément, chacun des tétons 44 est logé dans l'un des guides 50A ou 50B, tandis que les zones d'appui 48A et 48B du bouton basculant 24 sont en appui sur les faces d'appui 40A et 40B du bouton central 22. Sous l'effet du levier d'activation 76, le bouton central 22 repousse le bouton basculant 24 dans sa position relâchée, dans laquelle les tétons 44 sont en butée dans la partie terminale 54 du guide 50A ou 50B correspondant.

Ainsi, dans le premier mode de réalisation, le générateur 64, qui inclut le levier d'activation 76, et le bouton central 22 constituent ensemble un mécanisme de rappel 80, qui repousse le bouton basculant 24 dans sa position relâchée. Lorsque le générateur 64 est en configuration de repos, le mécanisme 80 est dans une configuration dite « stable », tandis que lorsque le générateur 64 est en configuration activée, le mécanisme 80 est lui aussi activé dans une configuration dite « contrainte ». La force de rappel du levier d'activation 76 du générateur 64 correspond à une force de rappel du mécanisme de rappel 80. Le bouton central 22 constitue une interface d'appui du mécanisme de rappel 80.

Sur la figure 5, le point de commande 16 est dans une configuration relâchée, dans laquelle les boutons central et basculant 22 et 24 sont chacun en position relâchée, et le mécanisme de rappel 80 en configuration stable.

On explique à présent le fonctionnement du point de commande 16.

Lorsqu'un utilisateur cherche à activer le bouton central 22, l'utilisateur exerce sur la touche centrale 28 une force, représentée par une flèche F3 sur la figure 5, parallèle à l'axe de pression A22 et orientée vers l'embase 60.

Sous l'effet de la force exercée par l'utilisateur, le bouton central 22 se rapproche progressivement de l'embase 60, tandis que conjointement la partie mobile 74 du générateur 64 se déplace de la position de repos vers la position activée par l'intermédiaire de la face 78 en appui sur le levier 76, générant de l'énergie électrique. Le bouton central 22 repousse directement le levier 76 du générateur 64, autrement dit le bouton central 22 fait directement passer le générateur 64 de la configuration de repos à la configuration activée. Dit autrement, lorsque le bouton central 22 est déplacé depuis sa position relâchée vers sa position enfoncée, le bouton central 22 active le mécanisme de rappel 80 depuis sa configuration stable vers sa configuration contrainte, sans autre action sur l'une des touches de pression 30A ou 30B. En particulier, les contacteurs 70 associés aux touches de pression 30A ou 30B ne sont pas activés.

Le mouvement de translation du bouton central 22 se poursuit jusqu'à ce que les butées 38 arrivent en appui sur l'embase 60. Le bouton central 22 est alors dans une position dite « enfoncée », le générateur 64 étant conjointement dans sa configuration activée. Dit autrement, l'utilisateur appuie sur la touche centrale 28 pour déplacer le bouton central 22 depuis sa position relâchée vers sa position enfoncée.

Au moins un des contacteurs 70, non représenté, est alors activé par le bouton central 22 en position enfoncée, et est associé par le système logique à un signal de commande spécifique du bouton central 22, ce signal étant émis par l'émetteur à destination de l'actionneur 14 grâce à l'énergie électrique générée par le générateur 64. Par exemple, le signal de commande associé au bouton central 22 est un signal d'arrêt de l'écran d'occultation 8 de l'installation de fermeture 2.

Ainsi, lorsque l'utilisateur appuie, suivant la flèche F3, sur la touche centrale 28 du bouton central 22, le générateur 64 est activé dans le même mouvement que le contacteur 70 associé au signal de commande du bouton central 22.

Lorsque l'utilisateur n'exerce plus de force sur le bouton central 22, le bouton 22 revient, sous l'action du levier d'activation 76 du générateur 64, dans sa position relâchée, tandis que le générateur 64 revient dans sa configuration de repos. Un signal de commande est alors émis. Dit autrement, lorsque le mécanisme de rappel 80 passe de sa configuration contrainte vers sa configuration stable, la touche de pression 30A est repoussée depuis sa position enfoncée vers sa position relâchée.

La figure 6 décrit une configuration du point de commande 16 dans laquelle un utilisateur exerce une force sur la touche de pression 30B du bouton basculant 24. La description associée est similaire à ce qui se passe lorsque l'utilisateur exerce une pression sur la touche 30A du bouton basculant 24, la description qui suit est ainsi valide dans les deux cas. Par exemple, le signal de commande associé à la touche de pression 30B du bouton basculant 24 est un signal de descente de l'écran d'occultation 8 de l'installation de fermeture 2, tandis que le signal de commande associé à la touche de pression 30A est un signal de montée de l'écran 8.

Sous l'effet d'une force, représentée par la flèche F4 sur la figure 6, exercée par l'utilisateur sur la touche de pression 30B, le bouton basculant 24 passe dans la position enfoncée. Le bouton 24 est alors conjointement soumis à la force exercée par l'utilisateur, à la force de rappel générée par le levier d'activation 76 par l'intermédiaire de la face d'appui 40B au contact de la zone d'appui 48B du bouton basculant 24 et à la force du contact des tétons 44 en butée dans les guides 50A.

Dans l'exemple de la figure 6, le moment résultant des forces citées ci-dessus entraîne un basculement du bouton basculant 24 par rapport au capot 20 du boitier 19 autour de l'axe de basculement 56A. Autrement dit, la force exercée par l'utilisateur sur la touche de pression 30B entraîne le basculement du bouton basculant 24 par rapport au capot 20 autour de l'axe de basculement 56A.

On comprend que symétriquement, lorsque l'utilisateur appuie sur la touche de pression 30A, le bouton basculant 24 pivote par rapport au capot 20 du boitier 19 autour de l'axe de basculement 56B.

Sur la figure 6, les tétons 44, logés dans les guides 50B dans une position relâchée du bouton basculant 24, se déplacent suivant l'axe de guidage 58 centré sur l'axe de basculement 56A.

Conjointement au basculement du bouton basculant 24, le bouton central 22 est déplacé depuis sa position relâchée vers sa position enfoncée, sous l'effet du contact entre la zone d'appui 48B et la face d'appui 40B. Autrement dit, le bouton basculant 24 entraine le bouton central 22. La face interne 78 du bouton central 22 est en appui sur le levier d'activation 76 du générateur 64, le levier 76 étant déplacé suivant la direction d'appui F2 et le générateur 64 passant de sa configuration de repos à sa configuration activée, générant ainsi au moins une partie de l'énergie électrique nécessaire à l'émission du signal de commande associé à la touche de pression 30B du bouton basculant 24. Autrement dit le bouton basculant 24 entraine le bouton central 22 depuis sa position relâchée vers sa position enfoncée et, conjointement, le bouton 22 fait passer le générateur 64 dans la configuration activée.

Plus généralement, lorsque l'une quelconque des touches secondaires 30A ou 30B est déplacée depuis sa position relâchée vers sa position enfoncée, son déplacement entraîne le mécanisme de rappel 80 depuis sa configuration stable vers sa configuration contrainte, par l'intermédiaire de la zone d'appui 48A ou 48B correspondante à la touche secondaire 30A ou 30B enfoncée, la zone d'appui 48A ou 48B correspondante coopérant avec le mécanisme de rappel 80.

Ainsi, dans le même mouvement, l'utilisateur appuie sur l'une des touches de pression 30A ou 30B du bouton basculant 24 et active le générateur 64.

Plus généralement, on comprend que lorsqu'un utilisateur enfonce indifféremment l'une des touches 28, 30A ou 30B, le générateur 64 passe dans la configuration activée dans le même mouvement que la touche 28, 30A ou 30B est enfoncée, ce qui rend la manipulation aisée pour l'utilisateur. D'autre part, un seul générateur 64 est nécessaire pour produire l'énergie électrique nécessaire à l'envoi des signaux de commande 18 correspondant aux touches centrale 28, 30A et 30B, ce qui est économique.

Sur la figure 6, on définit un premier levier L1 comme étant une distance maximale entre l'axe de basculement 56A et une partie de la deuxième touche de pression 30B la plus éloignée de l'axe 56A. On définit aussi un deuxième levier L2 comme étant une distance entre l'axe de basculement 56A et un point de contact de la zone d'appui 48B avec la face d'appui 40B.

Le bouton basculant 24 ayant ici une structure symétrique par rapport au plan transversal P1, une distance maximale entre l'axe de basculement 56B et une partie de la première touche de pression 30A la plus éloignée de l'axe 56B est aussi égale au premier levier L1, tandis qu'une distance entre l'axe de basculement 56B et le point de contact de la zone d'appui 48A avec la face d'appui 40A est aussi égale au deuxième levier L2.

Les zones d'appui 48A et 48B sont situées entre les axes de basculement 56A et 56B, tandis que les parties des touches de pression 30A et 30B les plus éloignées des axes 56A et 56B correspondants sont situées à l'extérieur des axes 56A et 56B. Le premier levier L1 est donc plus long que le deuxième levier L2. Cela se traduit par le fait que la force nécessaire à un utilisateur pour enfoncer la touche de pression 30B du bouton basculant 24 est inférieure à la force de rappel du générateur 64 exercée sur le bouton basculant 24 par l'intermédiaire du bouton central 22 au niveau du point de contact entre la zone d'appui 48B et la face d'appui 40B. Plus précisément, le ratio entre la force de l'utilisateur pour enfoncer la touche 30B et la force de rappel du générateur 64 est égal au ratio du deuxième levier L2 divisé par le premier levier L1.

Avantageusement, le premier levier L1 est supérieur de 40% au deuxième levier L2. De préférence, le premier levier L1 est supérieur de 100% au deuxième levier L2, c'est-à-dire que le premier levier L1 est plus long que le double du deuxième levier L2.

En conséquence, la force nécessaire à un utilisateur pour enfoncer la touche de pression 30B du bouton basculant 24 est inférieure à 80% de la force exercée par l'organe de rappel 76 du générateur 64, autrement dit inférieure à 80% de la force de rappel de du mécanisme de rappel 80.

De préférence, la force nécessaire pour enfoncer la touche de pression 30B du bouton basculant 24 est inférieure à 50% de la force de rappel du mécanisme de rappel 80, de préférence encore inférieure à 20%.

De façon analogue, la force nécessaire à un utilisateur pour enfoncer la touche de pression 30A du bouton basculant 24 est inférieure à 80% de la force de rappel de du mécanisme de rappel 80, de préférence inférieure à 50%, de préférence encore inférieure à 20%.

Lorsqu'un utilisateur appuie sur la touche de pression 30B du bouton basculant 24, l'amplitude du mouvement du bouton central 22 vers l'embase 60 parallèlement à l'axe de pression A22 est égale à l'amplitude du mouvement de la partie la plus éloignée de la touche de pression 30B du bouton basculant 24 multiplié par le ratio du deuxième levier L2 divisé par le premier levier L1.

L'amplitude du mouvement du bouton central 22 est donc inférieure à l'amplitude du mouvement de la partie de la touche de pression 30B la plus éloignée de l'axe 56A. De façon analogue, l'amplitude du mouvement du bouton central 22 est inférieure à l'amplitude du mouvement de la partie de la touche de pression 30A la plus éloignée de l'axe 56B. Le générateur 64 est conçu et est positionné au sein du point de commande 16 de manière à ce que la configuration activée du générateur 64 soit atteinte lorsque ou avant que le bouton basculant 24 soit en butée sur l'embase 60 dans sa position enfoncée.

Avantageusement, le ou les contacteurs 70 spécifiques au signal de commande associé au bouton central 22 ne sont pas actionnés lorsque le bouton central 22 est déplacé sous l'effet du bouton basculant 24. Autrement dit, lorsqu'un utilisateur déplace la touche de pression 30B dans sa position enfoncée, le ou les contacteurs 70 associés à la touche de pression 30B sont activés, tandis que le bouton central 22 se trouve dans une position intermédiaire entre la position relâchée et la position enfoncée, dans laquelle le ou les contacteurs 70 associés au bouton central 22 ne sont pas encore activés, alors que le générateur 64 se trouve dans sa configuration activée, dans laquelle le générateur 64 produit l'énergie électrique nécessaire à la transmission du signal associé à la touche de pression 30B.

Selon une variante, lorsque l'une des touches de pression 30A ou 30B du bouton basculant 24 est enfoncée, le ou les contacteurs 70 associés au bouton central 22 sont activés conjointement au ou aux contacteurs 70 associés à la touche de pression 30A ou 30B correspondante enfoncée. Le système logique comprend que l'activation conjointe des contacteurs 70 associés au bouton central 22 et associés à la touche de pression 30A ou 30B correspond au signal de commande de la touche 30A ou 30B enfoncée.

Selon une autre variante, un contacteur 70 est respectivement associé aux touches de pression 30A et 30B, et aucun contacteur 70 n'est associé au bouton central 22. Le signal de commande associé au bouton central 22 correspond alors à l'activation du générateur 64 en l'absence de l'activation de tout contacteur 70. Cette variante permet d'économiser le coût d'un contacteur 70.

Selon encore une autre variante d'utilisation du point de commande 16, lorsque les deux contacteurs 70 associés aux deux touches de pression 30A et 30B sont simultanément activés, alors que le contacteur 70 associé au bouton central 22 n'est pas activé, le système logique comprend que cette situation correspond à une commande spécifique, par exemple une commande de programmation du point de commande 16, ou bien l'envoi un message de programmation à l'actionneur 14.

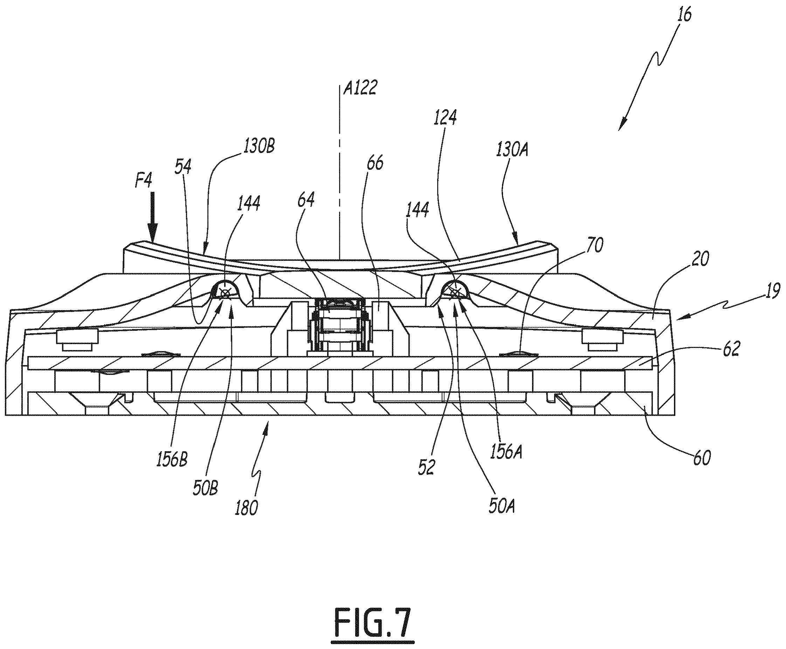

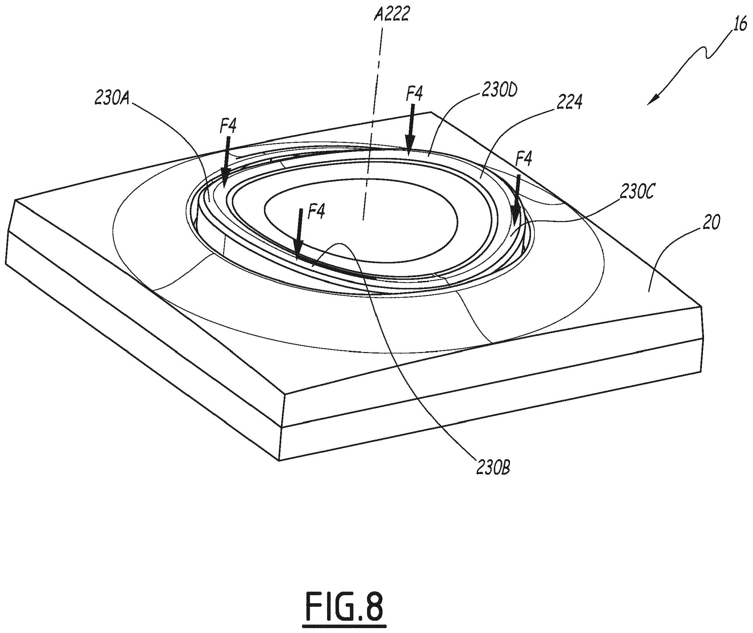

On décrit à présent, à l'aide des figures 7 et 8, les deuxième et troisième modes de réalisation du point de commande 16. Dans les deuxième et troisième modes de réalisation du point de commande 16, les éléments analogues à ceux du premier mode portent les mêmes références et fonctionnent de la même façon. Dans ce qui suit, on décrit principalement les différences entre le premier mode et les autres modes de réalisation.

Dans le deuxième mode de réalisation représenté sur la figure 7, une des principales différences avec le premier mode est que le point de commande 16 ne comprend pas le bouton central 22 du premier mode.

Le point de commande 16 comprend un bouton basculant 124, qui comprend deux touches de pression 130A et 130B et est monté basculant par rapport au boitier 19. Les deux touches de pression 130A et 130B, dites aussi première et deuxième touches, définissent chacune une position relâchée et une position enfoncée, la position enfoncée étant obtenue par action sur ladite touche de pression suivant une direction d'appui F4.

Le bouton basculant 124 est représenté en position relâchée sur la figure 7. Le bouton basculant 124 présente une forme incurvée sensiblement circulaire, qui définit en son centre un axe de pression A122, qui est parallèle à la direction d'appui F4 des touches de pression 130A et 130B. La forme du bouton basculant 124 n'est pas limitative.

Le bouton basculant 124 comprend des tétons 144, analogues dans leur fonction aux tétons 44 du premier mode, mais qui présentent ici chacun une forme de demi-cylindre, c'est-à-dire une forme de portion de cylindre dont la section est un demi-cercle. Une telle forme est moins consommatrice d'espace par rapport aux tétons 44 du premier mode de réalisation et permet la réalisation d'un point de commande 16 d'épaisseur réduite.

Les tétons 144 coopèrent avec les parties terminales 54 des guides 50A et 50B du capot 20, pour définir des axes de basculement respectifs 156A et 156B du bouton basculant 124. Les parties terminales 54 ont chacun la forme d'une portion de cylindre de section circulaire centré sur l'axe de basculement 156A ou 156B en configuration relâchée du bouton basculant 124.

Le générateur 64 est maintenu par les montants de guidage 66 de l'embase 60 et comprend un levier d'activation, analogue au levier d'activation 76 du premier mode mais qui n'est pas visible sur la figure 7. Le levier d'activation définit une unique direction d'activation parallèle à l'axe A122 et est en appui sur des zones d'appui du bouton basculant 124 situées en regard du générateur 64. Le levier d'activation tend ainsi à repousser le bouton basculant 124 dans sa position relâchée, et le générateur 64 constitue un mécanisme de rappel 180 du bouton basculant 124.

Lorsque l'une des première ou deuxième touches 130A ou 130B est déplacée par un utilisateur depuis sa position relâchée vers sa position enfoncée, son déplacement entraîne le mécanisme de rappel 180 depuis sa position relâchée vers sa position enfoncée.

Dans le troisième mode de réalisation de l'invention représenté sur la figure 8, une des principales différences avec les autres modes est que le point de commande 16 ne comprend pas de bouton central analogue au bouton 22, et qu'un bouton basculant 224 comprend quatre touches de pression 230A, 230B, 230C et 230D.

Le bouton basculant 224 présente une forme incurvée sensiblement circulaire, qui définit en son centre un axe de pression A222. Les quatre touches de pression 230A à 230D sont régulièrement réparties radialement à l'axe A222, chacune définissant une position relâchée et une position enfoncée, la position enfoncée étant obtenue par action sur ladite touche de pression suivant une direction d'appui F4, qui est parallèle l'axe A222.

Le bouton basculant 224 est représenté en position relâchée sur la figure 8, c'est-à-dire que toutes les touches de pression 230A à 230D sont en position relâchée.

Lorsqu'un utilisateur appuie sur l'une quelconque des touches de pression, par exemple sur la touche 230A, le bouton 224 bascule autour d'un axe de basculement, non représenté, qui est orthoradial à l'axe A222 et qui est situé entre l'axe A222 et la touche opposée à la touche 230A par rapport à l'axe A222, c'est-à-dire la touche 230C.

Le point de commande 16 comprend, en outre, un mécanisme de rappel, analogue au mécanisme de rappel 180 du deuxième mode mais non représenté dans le troisième mode, configuré pour maintenir le bouton basculant 224 dans sa position relâchée. Dans l'exemple illustré, le mécanisme de rappel est situé au sein du boitier du point de commande 16 dans l'alignement de l'axe A222.

Le mécanisme de rappel est ainsi situé entre la touche de pression 230A et l'axe de basculement associé à la touche 230A. Plus généralement, le mécanisme de rappel est situé à la fois entre chacune des touches de pression 230A à 230D et l'axe de basculement respectif associé à chacune des touches de pression 230A à 230D.

Dans l'exemple illustré, les quatre axes de basculement associés aux quatre touches 230A à 230D sont régulièrement répartis autour de l'axe A222 et définissent ensemble un carré. Les tétons, situés aux intersections de deux axes de basculement sécants, présentent une forme permettant le basculement du bouton basculant 224. Selon des exemples non limitatifs, les tétons comprennent des portions de sphères, qui coopèrent avec des guides présentant une forme complémentaire.

Quel que soit le mode de réalisation choisi, le passage de la configuration de repos à la configuration activée du générateur permet de générer suffisamment d'énergie pour au moins la lecture des états des contacteurs 70 et éventuellement pour l'émission d'un signal de commande fonction de ces états. Selon une autre variante non représentée, l'émission du signal de commande n'a lieu que lorsqu'est également récupérée l'énergie générée lors du passage du générateur 64 de sa configuration activée à sa configuration de repos, au relâché des touches 28, 30A, 30B, 130A ou 130B, en fonction de l'état des contacteurs 70 déterminé en configuration activée du générateur 64.

Dans les trois modes de réalisation illustrés, le point de commande 16 est alimenté en énergie électrique par le générateur 64. Selon une variante non représentée, le point de commande 16 comprend une source interne d'électricité, telle qu'une pile ou un accumulateur. Selon une autre variante non représentée, le point de commande 16 est alimenté en énergie électrique par un branchement depuis une source externe d'électricité. Selon une autre variante encore, un accumulateur interne du point de commande 16 est alimenté en énergie électrique par une cellule photovoltaïque externe au point de commande 16.

Bien entendu, lorsque le point de commande 16 ne comprend pas de générateur du type du générateur 64, d'autres organes de rappel sont prévus pour le bon fonctionnement du mécanisme de rappel 80 ou 180. À titre d'exemples non limitatifs, de tels organes de rappels peuvent être des dispositifs réalisés en métal, tels que des ressorts, ou bien réalisés en matériau élastomère.

Selon une variante non représentée, le mécanisme de rappel 80 ou 180 comprend des organes de rappel en complément du générateur 64, par exemple pour s'assurer de l'effort de rappel suffisant pour positionner les touches de pression 30A ou 30B du bouton basculant 24 dans leur position relâchée, sans avoir à augmenter la force nécessaire pour enfoncer la touche centrale 28 du bouton central 22.

Dans le premier mode de réalisation représenté sur les figures, lorsqu'un utilisateur appuie sur le bouton central 22, le bouton basculant 24 n'est plus maintenu en position relâchée par les faces d'appui 40A et 40B en appui sur les zones d'appui 48A et 48B ; selon une variante non représentée, d'autres organes de rappels sont alors prévus pour repousser le bouton basculant 24 dans sa position relâchée lorsqu'un utilisateur enfonce le bouton central 22.

Selon une autre variante non représentée, les guides 50A et 50B ont des formes conçues pour que les tétons 44 restent au contact des parties terminales 54 en regard. En particulier, le conduit 52 de chacun des guides 50A et 50B peut présenter une forme empêchant le déplacement des tétons 44 par simple gravité ou comprendre un ergot ménagé au sein du conduit 52 correspondant, la forme du conduit ou les ergots étant conçus pour retenir les tétons 44 dans les conduits 52 lorsque le bouton central est enfoncé et pour laisser lasser les tétons 44 lorsqu'un utilisateur appuie sur l'une des touches secondaires 30A ou 30B du bouton basculant 24. Les ergots peuvent être déformables, ou simplement former un point dur de passage du téton 44 dans le conduit 52 correspondant. Les parois du conduit 52 peuvent être orientées parallèles aux axes de guidage 58. Le conduit peut ainsi suivre une ligne directrice en arc de cercle.

Dans le premier mode de réalisation du point de commande 16, les zones d'appui 48A et 48B du bouton basculant 24, ménagées sur une partie intermédiaire entre les touches de pression 30A et 30B, coopèrent avec les faces d'appui 40A et 40B du bouton central 22. Dans le deuxième mode de réalisation, les zones d'appui du bouton secondaire 124 sont directement en contact avec le levier d'activation 76 du générateur 64, sans l'intermédiaire des faces d'appui du bouton principal, qui est omis.

Plus généralement, d'autres formes de réalisation des zones d'appui 48 sont possibles, tant que les zones d'appui 48A et 48B entrainent le mécanisme de rappel de 80 ou 180 depuis sa configuration stable vers sa configuration contrainte, soit directement soit par l'intermédiaire d'une ou plusieurs autres pièces du point de commande 16.

Dans les premier et deuxième modes de réalisation, les axes de basculement 56A et 56B ou 156A et 156B sont distincts. En variante non représentée, les axes de basculement sont confondus et définissent un unique axe de basculement, autour duquel le bouton basculant 24 bascule lorsque l'une des touches de pression 30A, 30B, 130A ou 130B est enfoncée. Dans le cas où un unique axe de basculement est présent, des zones d'appui distinctes sont prévues de part et d'autre du plan transversal P1, comme décrit dans une des variantes précédentes.

Dans les trois modes de réalisation illustrés sur les figures, les touches de pressions 30A et 30B, 130A et 130B ou 230A à 230D, sont ménagées sur le bouton basculant 24, 124 ou 224, qui est monobloc et réalisé d'une seule pièce. En variante non représentée, le bouton secondaire est réalisé en plusieurs pièces, chaque pièce comportant une touche de pression et étant montée pivotante par rapport au boitier autour d'un axe de basculement, toutes les pièces étant repoussées en position relâchée par un même mécanisme de rappel situé entre chacune des touches de pression et l'axe de basculement correspondant.

Dans le deuxième mode de réalisation, le générateur 64 est monté sur l'embase 60 entre les pattes 34. En variante non représentée, des pattes de fixation analogues aux pattes 34 sont ménagées sur une face interne du bouton basculant 124, orientée vers l'embase 60, et le générateur 64 est monté sur le bouton secondaire entre les pattes de fixation.

Les modes de réalisation et les variantes mentionnées ci-dessus peuvent être combinés entre eux pour générer de nouveaux modes de réalisation de l'invention.

## Revendications

1. Point de commande (16) pour une installation de fermeture ou de protection solaire, comprenant un boitier (19), au moins deux touches de pression (30A, 30B ; 130A, 130B ; 230A, 230B, 230C, 230D) et un mécanisme de rappel (80 ; 180), dans lequel :
- les touches de pression, dites première (30A ; 130A ; 230A, 230D) et deuxième touches (30B ; 130B ; 230B, 230C), définissent chacune une position relâchée et une position enfoncée, la position enfoncée étant obtenue par action d'un utilisateur sur la touche de pression suivant une direction d'appui (F4) et étant associée à un signal de commande (18) respectif,
- le mécanisme de rappel (80 ; 180), qui est activable suivant un axe de pression (A22 ; A122 ; A222) sensiblement parallèle à la direction d'appui (F4) entre une configuration stable et une configuration contrainte, est conçu pour repousser la première touche (30A ; 130A ; 230A, 230D) depuis sa position enfoncée vers sa position relâchée lorsque le mécanisme de rappel passe de sa configuration contrainte vers sa configuration stable ;
- la première touche (30A ; 130A ; 230A, 230D) est montée pivotante par rapport au boiter autour d'un premier axe de basculement (56B ; 156B),
- la deuxième touche (30B ; 130B ; 230B, 230C) est montée pivotante par rapport au boiter autour d'un deuxième axe de basculement (56A ; 156A),
- le mécanisme de rappel (80; 180) est conçu pour repousser également la deuxième touche (30B ; 130B ; 230B, 230C) depuis sa position enfoncée vers sa position relâchée lorsque le mécanisme de rappel passe de sa configuration contrainte vers sa configuration stable,
- le mécanisme de rappel est situé à la fois entre la première touche et le premier axe de basculement et entre la deuxième touche et le deuxième axe de basculement,
- le mécanisme de rappel est conçu de sorte que, lorsque l'une quelconque des première ou deuxième touches (30A, 30B ; 130A, 130B ; 230A, 230B, 230C, 230D) est déplacée par un utilisateur depuis sa position relâchée vers sa position enfoncée, son déplacement entraîne le mécanisme de rappel (80 ; 180) depuis sa configuration stable vers sa configuration contrainte, et
- le mécanisme de rappel (80 ; 180) comprend un générateur d'électricité (64), le générateur (64) présentant une configuration de repos et une configuration activée, le générateur (64) passant de la configuration de repos à la configuration activée lorsqu'une quelconque des touches de pression (28, 30A, 30B ; 130A, 130B ; 230A, 230B, 230C, 230D) est déplacée depuis la position relâchée vers la position enfoncée, le générateur (64) étant conçu pour générer une quantité d'énergie électrique pour émettre le signal de commande (18) associé à ladite touche de pression au moyen d'un émetteur, le mécanisme de rappel (80 ;180) étant conçu pour, lorsque celui-ci est activé depuis sa configuration stable vers sa configuration contrainte, faire passer le générateur (64) dans la configuration activée, et lorsque le mécanisme de rappel (80 ; 180) est entraîné depuis sa configuration contrainte vers sa configuration stable, faire passer le générateur (64) dans la configuration de repos,
**caractérisé en ce que** la première touche (30A; 130A ; 230A, 230D) présente une première zone d'appui (48A) et **en ce que** la deuxième touche (30B ; 130B ; 230B, 230C) présente une deuxième zone d'appui (48B), la première et la deuxième zone d'appui (48A, 48B) coopérant sélectivement avec le mécanisme de rappel (80 ; 180) de manière à entrainer le mécanisme de rappel de sa configuration stable vers sa configuration contrainte lorsque l'une des touches (30A, 30B ; 130A, 130B ; 230A, 230B, 230C, 230D) est déplacée par un utilisateur depuis sa position relâchée vers sa position enfoncée.

2. Point de commande (16) selon la revendication précédente, **caractérisé en ce que** le point de commande comprend au moins un premier contacteur (70), disposé à être activé lorsque la première touche (30A ; 130A ; 230A, 230D) est enfoncée, et au moins un deuxième contacteur (70) disposé à être activé lorsque la deuxième touche (30B ; 130B ; 230B, 230C) est enfoncée, le premier contacteur et la première touche étant situés d'un même côté du mécanisme de rappel (80 ; 180), tandis que le deuxième contacteur et la deuxième touche sont situés d'un même autre côté du mécanisme de rappel.

3. Point de commande (16) selon l'une quelconque des revendications précédentes, **caractérisée en ce que** le deuxième axe de basculement (56A ; 156A) est situé au voisinage de la première zone d'appui (48A), et le premier axe de basculement (56B ; 156B) est situé au voisinage de la deuxième zone d'appui (48B).

4. Point de commande (16) selon l'une quelconque des revendications précédentes, **caractérisée en ce que** les zones d'appui (48A, 48B) sont situées entre les axes de basculement (56A, 56B ; 156A, 56B), de manière que la force nécessaire pour enfoncer l'une quelconque des touches de pression (30A, 30B ; 130A, 130B ; 230A, 230B, 230C, 230D) est inférieure à 80% d'une force de rappel du mécanisme de rappel (80 ; 180), de préférence inférieure à 50%, de préférence encore inférieure à 20%.

5. Point de commande (16) selon l'une quelconque des revendications précédentes, **caractérisé en ce qu'**il comprend un bouton basculant (24 ; 124 ; 224) intégrant les première et deuxième touches (30A, 30B ; 130A, 130B ; 230A, 230B, 230C, 230D), le bouton basculant étant monobloc et monté basculant par rapport au boitier (19) suivant les deux axes de basculement (56A, 56B ; 156A, 156B).

6. Point de commande (16) selon l'une quelconque des revendications précédentes, **caractérisé en ce que** le mécanisme de rappel (80) comprend un bouton central (22) avec une touche centrale (28), le bouton central formant une interface d'appui telle que, lorsqu'un utilisateur appuie sur la touche centrale pour déplacer le bouton central depuis une position relâchée vers une position enfoncée, le mécanisme de rappel (80) est entraîné depuis sa configuration stable vers sa configuration contrainte, sans autre action sur l'une des touches de pression (30A, 30B).

7. Point de commande (16) selon les revendications 5 et 6 prises en combinaison, **caractérisé en ce que** le bouton central (22) est logé dans une ouverture centrale (32) du bouton basculant (24).

8. Point de commande (16) selon l'une quelconque des revendications 5 à 7, **caractérisé en ce que** le bouton basculant (24 ; 124) comprend des tétons (44) orientés suivant les axes de basculement (56A, 56B ; 156A, 156B), le point de commande comprenant également un capot (20), qui comprend des guides (50A, 50B), munis chacun d'un passage (52) et d'une partie terminale (54), chaque partie terminale ayant une forme d'une portion de cylindre et accueillant les tétons (44) dans une position relâchée du bouton basculant, tandis que lorsqu'une touche de pression (30A, 30B ; 130A, 130B) du bouton basculant (24 ; 124) est enfoncée, l'axe de basculement correspondant se décale par rapport à la partie terminale (54) en direction du passage (52), tandis que l'autre axe de basculement reste logé dans la partie terminale (54).

9. Point de commande (16) selon la revendication précédente, **caractérisé en ce que** la partie terminale (54) est sous forme de portion de cylindre de section circulaire centré sur l'axe de basculement (56A, 56B ; 156A, 156B).

10. Point de commande (16) selon l'une quelconque des revendications précédentes, **caractérisé en ce que** les configurations de repos et activée du générateur (64) définissent une direction d'activation (F1) du générateur, qui est parallèle à la direction d'appui (F4) des touches de pression (28, 30A, 30B ; 130A, 130B ; 230A, 230B, 230C, 230D).

11. Point de commande (16) selon l'une quelconque des revendications précédentes, **caractérisé en ce que** le générateur (64) comprend un organe de rappel (76) qui tend à ramener le générateur dans la configuration de repos et qui, conjointement, tend à ramener les touches de pression (28, 30A, 30B ; 130A, 130B ; 230A, 230B, 230C, 230D) dans leur position relâchée.

12. Point de commande (16) selon la revendication précédente, **caractérisé en ce que** l'effort d'activation de l'organe de rappel (76) du générateur (64) est compris entre 3 N et 15 N, de préférence entre 5 N et 12 N.

13. Installation de fermeture (2) ou de protection solaire, comprenant un écran d'occultation (8) et un actionneur d'entrainement (14) de cet écran, l'actionneur d'entrainement étant commandé par un point de commande (16), **caractérisée en ce que** le point de commande est selon l'une quelconque des revendications précédentes.
